(19) Europäisches Patentamt
European Patent Office
Office européen des brevets

(11) Numéro de publication: **0 000 457**
**B1**

(12) **FASCICULE DE BREVET EUROPEEN**

(45) Date de publication du fascicule du brevet: **02.06.82**

(51) Int. Cl.³: **C 22 B 58/00**, C 22 B 3/00, B 01 D 11/04

(21) Numéro de dépôt: **78400035.8**

(22) Date de dépôt: **27.06.78**

# (54) Procédé de récupération du gallium de solutions très basiques par extraction liquide/liquide.

(30) Priorité: **13.07.77 FR 7721607**

(43) Date de publication de la demande:
**24.01.79 Bulletin 79/2**

(45) Mention de la délivrance du brevet:
**02.06.82 Bulletin 82/22**

(84) Etats contractants désignés:
**CH DE FR GB**

(56) Documents cités:
**AU - A - 448 131**
**FR - A - 952 976**
**US - A - 3 214 239**
**US - A - 3 971 843**

(73) Titulaire: **RHONE-POULENC INDUSTRIES**
**22 Avenue Montaigne**
**F-75008 Paris (FR)**

(72) Inventeur: **Helgorsky, Jacques**
**21, rue de la République**
**F-95740 - Frepillon (FR)**
Inventeur: **Leveque, Alain**
**8-10, rue Manin**
**F-75019 - Paris (FR)**

(74) Mandataire: **Savina, Jacques et al,**
**RHONE-POULENC RECHERCHES Service Brevets Chimie et Polymères 25, Quai Paul Doumer**
**F-92408 Courbevoie Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Procédé de récupération du gallium de solutions très basiques par extraction liquide/liquide

La présente invention concerne un perfectionnement au procédé d'extraction liquide/liquide du gallium contenu dans des solutions aqueuses basiques, en particulier tel que décrit dans la demande de brevet français n° 2.277.897 et ses additions numéros 2.307.047, 2.307.882 et 2.365.641.

Ces demandes décrivent notamment un procédé de récupération du gallium présent dans des solutions aqueuses alcalines qui contiennent aussi des composés de l'aluminium et du sodium, par extraction liquide/liquide au moyen d'hydroxyquinoléines substituées. Le procédé étant plus particulièrement appliqué à la récupération du gallium des lessives d'aluminate de sodium du procédé Bayer à l'aide d'hydroxy-8 quinoléines. Le procédé de récupération du gallium décrit dans ces demandes comporte une étape d'extraction proprement dite et une étape de régénération du solvant et de récupération du gallium au moyen d'acides forts. Il existe des variantes préférées de mise en oeuvre de ce procédé selon, d'une part, l'acide utilisé et sa concentration dans l'étape de régénération du solvant chargé en gallium et, d'autre part, selon la pureté du gallium que l'on désire recueillir. Selon une première variante, le procédé préféré de récupération du gallium présent dans des solutions aqueuses très basiques contenant aussi des composés de l'aluminium et du sodium comporte les phases suivantes:

— mise en contact de la solution aqueuse avec une hydroxyquinoléine substituée insoluble dans l'eau en solution dans un solvant organique insoluble dans l'eau pris dans le groupe contenant les hydrocarbures aliphatiques et aromatiques halogénés ou non, de telle façon que le gallium et une certaine quantité de sodium et d'aluminium passent de la phase aqueuse dans la phase organique,

— séparation de la phase organique de la phase aqueuse,

— mise en contact de la phase organique avec une solution aqueuse diluée d'un acide pour extraire le sodium et l'aluminium de la phase organique, le gallium restant en solution dans ladite phase organique,

— séparation de la phase organique de la phase aqueuse et mise en contact de la phase organique restante avec une solution aqueuse d'acide plus concentrée afin d'extraire le gallium de la phase organique dans la phase aqueuse,

— séparation du gallium de la phase aqueuse.

Les acides utilisés sont de préférence l'acide chlorhydrique, l'acide sulfurique et l'acide nitrique. La concentration de la solution aqueuse diluée d'acide est de préférence comprise entre 0,2 M et 0,5 M. La concentration de la solution aqueuse d'acide plus concentrée est généralement de préférence supérieure à 1,6 M; mais, dans le cas où l'on met en oeuvre l'acide chlorhydrique, celle-ci est de préférence comprise entre 1,3 M et 2,2 M et plus spécialement entre 1,6 M et 1,8 M.

Selon une deuxième variante, le procédé préféré de récupération du gallium comporte les phases suivantes:

— mise en contact de la solution aqueuse avec une hydroxyquinoléine substituée insoluble dans l'eau en solution dans un solvant organique insoluble dans l'eau pris dans le groupe comprenant les hydrocarbures aliphatiques et aromatiques halogénés ou non de telle façon que le gallium et une certaine quantité de sodium et d'aluminium passent de la phase aqueuse dans la phase organique,

— séparation de la phase organique de la phase aqueuse,

— mise en contact de la phase organique avec une solution aqueuse concentrée d'un acide capable de complexer le gallium sous forme anionique, le gallium restant en solution dans la phase organique, tandis que le sodium et l'aluminium passent dans la phase aqueuse,

— séparation de la phase organique de la phase aqueuse et mise en contact de la phase organique restante avec une solution aqueuse diluée d'acide pour transférer le gallium de la phase organique dans la phase aqueuse,

— séparation du gallium de la phase aqueuse.

Les acides utilisés sont de préférence l'acide chlorhydrique et l'acide bromhydrique. La concentration de la solution concentrée est de préférence comprise entre 5 M et 8 M et celles de la solution diluée entre 1,3 M et 2,2 M.

Par ailleurs, et selon une troisième variante, si l'on désire un gallium moins purifié, le procédé peut comporte les étapes suivantes:

— mise en contact de la solution aqueuse avec une hydroxyquinoléine substituée insoluble dans l'eau en solution dans un solvant organique insoluble dans l'eau pris dans le groupe comprenant les hydrocarbures aliphatiques et aromatiques halogénés ou non, de telle façon que le gallium et une certaine quantité de sodium et d'aluminium passent de la phase aqueuse dans la phase organique,

— séparation de la phase organique de la phase aqueuse,

— mise en contact de la phase organique avec une solution aqueuse d'un acide pour extraire le sodium, l'aluminium et le gallium de la phase organique,

— séparation de la phase aqueuse et organique,

— récupération du gallium, du sodium et de l'aluminium.

Les acides utilisés sont de préférence soit de l'acide sulfurique ou l'acide nitrique à une concentration supérieure à 1,6 M, soit l'acide chlorhydrique ou l'acide bromhydrique à une concentration comprise entre 1,3 M et 2,2 M.

Les solvants organiques mis en oeuvre en particulier dans ces variantes sont les diluants utilisés en extraction liquide/liquide. Ils peuvent être utilisés seuls ou en mélange. Parmi ceux-ci, on peut citer: les composés aliphatiques comme par exemple l'heptane et les coupes pétrolières du type Kérosène; les composés aromatiques comme par exemple le benzène, le toluène, le xylène et les coupes du type Solvesso (marque déposée par la Société Exxon) et enfin les dérivés halogénés de ces composés comme par exemple le chloroforme et le tétrachlorure de carbone.

De manière connue, dans l'étape d'extraction du gallium décrite dans ces demandes, il peut être avantageux d'ajouter dans la phase organique d'extraction des corps à fonction alcool, tels que les alcools lourds comme le N-décanol et l'isodécanol et des phénols lourds divers, ainsi que divers autres composés solvatants tels que certains esters phosphoriques comme le tributyl phosphate.

Les hydroxyquinoléines substituées mises en oeuvre sont celles qui peuvent extraire le gallium par complexation, elles doivent de plus être plus solubles dans la phase organique que dans la phase aqueuse.

Les hydroxyquinoléines substituées convenant sont notamment celles de formule générale

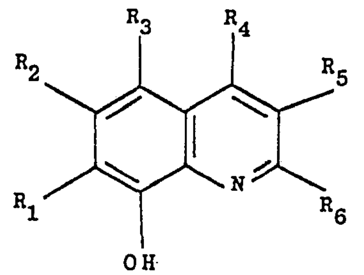

dans laquelle $R_1$, $R_2$, $R_3$, $R_4$, $R_5$, $R_6$ identiques ou différents sont choisis parmi le groupe constitué par l'hydrogène, les radicaux substitués ou non alkyles, alcényles, cycloaliphatiques, aromatiques; $R_1$, $R_2$, $R_3$, $R_4$, $R_5$, $R_6$ ne pouvant représenter simultanément H. Parmi ces hydroxyquinoléines substituées, celles convenant particulièrement bien sont notamment les $\alpha$ alcényl hydroxy-8 quinoléines, les $\beta$ alcényl hydroxy-8 quinoléines et les alkyl hydroxy-8 quinoléines dans lesquelles $R_{n\ (n\ =\ 1,2,3,4,5,6)}$ représente un hydrogène ou un radical alkyle.

Les $\alpha$ alcényl hydroxy-8 quinoléines préférées ont pour formule générale

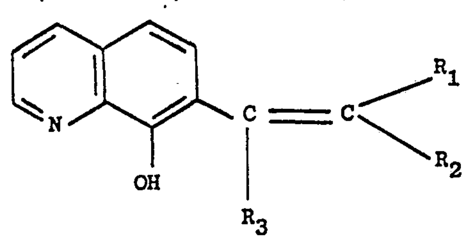

dans laquelle $R_1$, $R_2$, $R_3$ représentent un hydrogène ou un groupement hydrocarboné éventuellement substitué. Parmi celles-ci, on utilisera notamment celles de formule générale

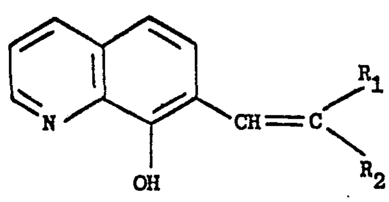

ou

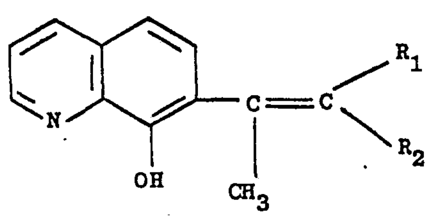

Les $\beta$ alcényl hydroxy-8 quinoléines préférées ont pour formule générale

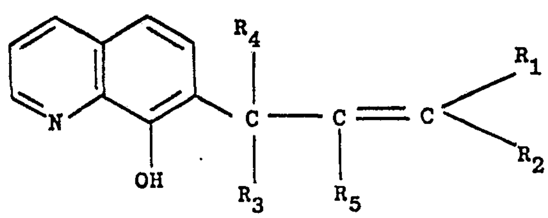

dans laquelle $R_1$, $R_2$, $R_3$, $R_4$, $R_5$ représentent un hydrogène ou un groupement hydrocarboné éventuellement substitué.

Les hydroxyquinoléines peuvent être mises en oeuvre seules ou en mélange.

La proportion en hydroxyquinoléine substituée dans la phase organique n'est pas critique et peut varier dans de larges limites. Toutefois, une proportion comprise entre 1 et 50% en volume rapportée à la phase organique convient généralement, une proportion comprise entre 6 et 12% étant économiquement favorable.

Par ailleurs, bien que la température ne soit pas un paramètre critique, pour obtenir de bons résultats selon le procédé décrit dans ces demandes, il est avantageux que l'étape d'extraction soit effectuée à une température assez élevée pratiquement inférieure à 100°C et, de préférence, comprise entre 50 et 80°C. On peut ajouter qu'en pratique industrielle, les solutions généralement traitées sont des solutions d'aluminate du procédé Bayer et particulièrement les solutions dites "décomposées" qui ont une température voisine de 50°C. Il se trouve que cette température, bien que moins favorable qu'une température plus élevée, suffit cependant à assurer des rendements d'extraction satisfaisants; de plus, l'étape de régénération du solvant et de récupération du gallium est effectuée de telle façon que la phase organique est traitée afin d'en récupérer le gallium par une solution d'acide à une température inférieure à celle de l'étape d'extraction et de préférence au voisinage de la température ambiante.

Les solutions très basiques traitées selon le procédé décrit dans ces demandes sont notamment celles dans lesquelles la concentration en $OH^-$ peut aller jusqu'à 13—14 ions g/l. Ainsi, les lessives d'aluminate de sodium du procédé Bayer traitées de préférence selon ce procédé ont généralement des compositions correspondant à:

$Na_2O$ : 100 à 400 g/l
$Al_2O_3$ : 40 à 150 g/l

les lessives dites "décomposées" ayant généralement des compositions telles que:

$Na_2O$ : 150 à 200 g/l
$Al_2O_3$ : 70 à 100 g/l

En pratique industrielle, les installations utilisées selon ce procédé se présentent de la manière suivante: dans un premier dispositif d'extraction on envoie la solution d'aluminate de sodium appauvrie en alumine à la suite de sa "décomposition" et la phase organique constituée du complexant choisi, d'un solvant et éventuellement de corps à fonction alcool et autres composés solvatants; le gallium passe alors pour une fraction importante dans la phase organique, laquelle fraction dépend des débits respectifs des deux liquides. Passent également dans la phase organique, de l'aluminium, du sodium et certaines impuretés. La phase organique ainsi chargée est mise en contact dans un deuxième dispositif d'extraction avec une première solution de régénération constituée par un acide fort dilué ou par un acide fort complexant concentré ce qui dans les deux cas ne laisse pratiquement dans cette phase organique que le gallium; cette phase organique est traitée ensuite dans un troisième dispositif d'extraction à contre-courant où elle est mise en contact avec un acide fort aux fins de récupération du gallium, puis subit un lavage à l'eau avant d'être recyclée dans le premier dispositif d'extraction; la solution acie ayant récupéré le gallium est ensuite traitée afin de parfaire sa purification puis le gallium en est extrait. On peut également envisager un dispositif industriel plus simple mais conduisant à un gallium moins purifié; un tel type de dispositif comporte un premier appareil d'extraction comme décrit précédemment à la sortie duquel on effectue dans un deuxième appareil fonctionnant à contre-courant, une seule régénération par une solution d'acide fort, de l'aluminium, du sodium et du gallium contenus dans la phase organique.

Par ailleurs, selon la demande n° 2.365.641, il a été trouvé que l'utilisation prolongée d'alcényl hydroxy-8 quinoléine dans une unité d'extraction du gallium selon le procédé décrit dans la demande de brevet français n° 2.277.897 et ses deux additions numéros 2.307,047 et 2.307.882 conduit à leur dégradation progressive du fait de la basicité du milieu d'extraction ce qui se traduit par une baisse de leur pouvoir extractant. La demanderesse a été conduite à sélectionner, dans la classe des hydroxyquinoléines substituées, certaines d'entre elles qui s'avèrent présenter une stabilité accrue en milieu très basique et qui conservent les remarquables propriétés extractantes du gallium des lessives d'aluminate de sodium des alcényl hydroxy-8 quinoléines. Ainsi, la demanderesse a proposé dans sa demande numéro 2.365.641 des hydroxyquinoléines substituées choisies parmi le groupe constitué par les hydroxyquinoléines de formule générale:

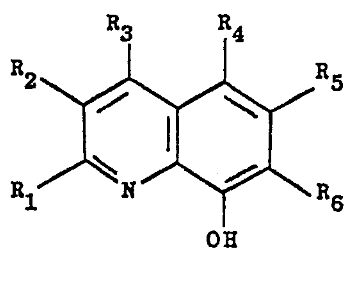

dans laquelle $R_{n\ (n\ =\ 1,2,3,4,5,6)}$ est un radical alcoyl ou un hydrogène.

Le radical alcoyl $R_n$ comporte, dans un mode de réalisation préféré, de 5 à 20 atomes de carbone.

Selon un autre mode de réalisation préféré, le radical R est situé en position 7 sur le cycle hydroxy-8 quinoléine et les produits préféres utilisés répondent à la formule générale:

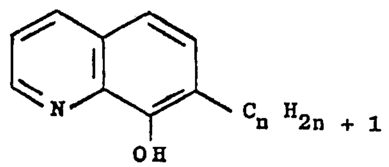

dans laquelle n est de préférence compris entre 5 et 20.

Les hydroxyquinoléines selon ce procédé permettent une extraction presque totale et sans perte au cours du temps du gallium présent dans des solutions aqueuses très basiques et en particulier des lessives d'aluminate de sodium du procédé Bayer.

Poursuivant ses travaux, la demanderesse a trouvé que, bien que la cause essentielle de la dégradation des hydroxy-8 quinoléines soit la nature très basique du milieu, l'oxydation de ces produits par l'oxygène de l'air conduisait également à une certaine dégradation au cours de leur utilisation prolongée; cette dernière dégradation affectant à des degrés divers les différents types d'hydroxy-8 quinoléines utilisables. La présente invention a pour but d'obvier à cet inconvénient.

La présente invention concerne un procédé d'extraction liquide/liquide du gallium contenu dans des solutions aqueuses basiques par mise en contact de la solution aqueuse avec une phase organique contenant principalement un solvant organique et au moins une hydroxyquinoléine substituée caractérisé en ce que l'on opère sous atmosphère inerte.

L'atmosphère inerte peut être constituée en particulier par une atmosphère d'argon ou d'azote.

Les différentes modalités de mise en oeuvre du procédé selon l'invention sont celles qui ont été rappelées ci-dessus. Toutes les phases du procédé peuvent être réalisées sous atmosphère inerte étant bien entendu que la phase d'extraction doit l'être obligatoirement.

Bien que les différentes modalités de mise en oeuvre du procédé selon l'invention aient été décrites dans ce qui précède, notamment dans le rappel du procédé décrit dans les demandes de brevets français n° 2 277 897, 2 307 047, 2 307 882, 2 365 641, on en rappelle ci-après certains aspects.

Le solvant organique mis en oeuvre selon le procédé de l'invention est choisi parmi le groupe constitué par les hydrocarbures aromatiques et aliphatiques halogénés ou non.

L'hydroxyquinoléine substitué mise en oeuvre selon le procédé de l'invention extrait le gallium par complexation et est plus soluble dans la phase organique que dans la phase aqueuse.

Les hydroxyquinoléines substituées convenant sont notamment celles de formule générale

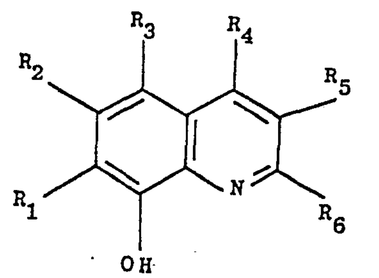

dans laquelle $R_1$, $R_2$, $R_3$, $R_4$, $R_5$, $R_6$ identiques ou différents sont choisis parmi le groupe constitué par l'hydrogène, les radicaux substitués ou non alkyles, alcényles, cycloaliphatiques, aromatiques; $R_1$,$R_2$, $R_3$, $R_4$, $R_5$, $R_6$ ne pouvant représenter simultanément H. Parmi ces hydroxyquinoléines substituées, celles convenant particulièrement bien sont notamment les $\alpha$ alcényl hydroxy-8 quinoléines, les $\beta$ alcényl hydroxy-8 quinoléines et les alkyl hydroxy-8 quinoléines dans lesquelles $R_{n\ (n\ =\ 1,2,3,4,5,6)}$ représente un hydrogène ou un radical alkyle.

Les $\alpha$ alcényl hydroxy-8 quinoléines préférées ont pour formule générale:

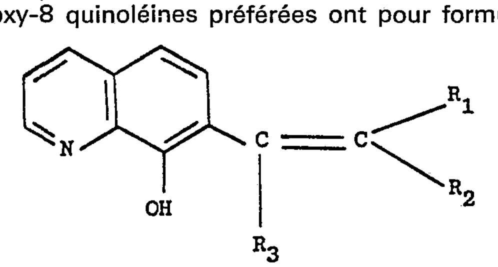

dans laquelle $R_1$, $R_2$, $R_3$ représentent un hydrogène ou un groupement hydrocarboné éventuellement substitué.

Les alkyl hydroxy-8 quinoléines préférées ont pour formule générale

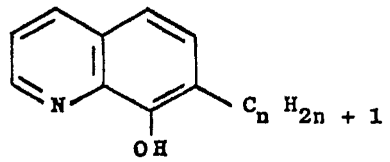

Les $\beta$ alcényl hydroxy-8 quinoléines préférés ont pour formule générale

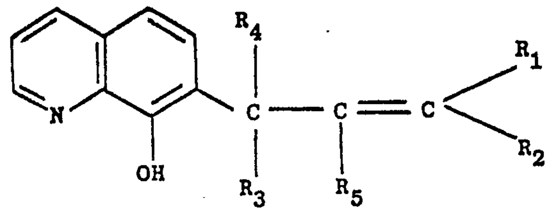

dans laquelle $R_1$, $R_2$, $R_3$, $R_4$, $R_5$ représentent un hydrogène ou un groupement hydrocarboné éventuellement substitué.

Les hydroxyquinoléines peuvent être mises en oeuvre seules ou en mélange.

La proportion en hydroxyquinoléine substituée dans la phase organique n'est pas critique et peut varier dans de larges limites. Toutefois, une proportion comprise entre 1 et 50% en volume rapportée à la phase organique convient généralement, une proportion comprise entre 6 et 12% étant économiquement favorable.

Il peut être avantageux d'ajouter dans la phase organique d'extraction un agent modifieur choisi parmi le groupe comprenant les corps à fonction alcool et les esters phosphoriques.

La présente invention concerne également un procédé de récupération du gallium contenu dans des solutions aqueuses basiques par extraction liquide/liquide caractérisé en ce que l'on met en contact, sous atmosphère inerte, la solution aqueuse avec une phase organique contenant principalement un solvant organique et au moins une hydroxyquinoléine substituée, on opère la séparation de la phase organique de la phase aqueuse, qu'au moins une fois, d'une part, on met en contact la phase organique avec une solution d'acide fort, et, d'autre part, on sépare la phase organique restante de la phase aqueuse et qu'ensuite on récupère le gallium de la phase aqueuse.

La présente invention concerne également la récupération du gallium contenu dans des solutions aqueuses basiques par extraction liquide/liquide par mise en contact de la solution aqueuse avec une phase organique contenant principalement un solvant organique et une hydroxyquinoléine substituée caractérisé en ce que la séparation de la phase organique de la phase aqueuse, et/ou la mise en contact de la phase organique avec une solution d'acide fort, et/ou la séparation de la phase organique restante de la phase aqueuse, et/ou la récupération du gallium de la phase aqueuse sont effectuées sous atmosphère inerte.

L'acide mis en oeuvre est choisi parmi le groupe comprenant l'acide chlorhydrique, l'acide sulfurique, l'acide nitrique, l'acide bromhydrique; sa concentration dans la ou les étapes de régénération du solvant chargé en gallium est celle qui a été relevée ci-dessus pour les différentes variantes de mise en oeuvre du procédé selon les demandes de brevet français numéros 2.277.897, 2.307.047, 2.307.882 et 2.365.641.

L'exemple donné ci-après montre que le fait de travailler sous atmosphère inerte lors de la phase d'extraction du gallium de la lessive Bayer permit de réduire considérablement la perte en hydroxyquinoléine, ce qui améliore notablement l'économie du procédé.

Exemple: l'hydroxyquinoléine de formule:

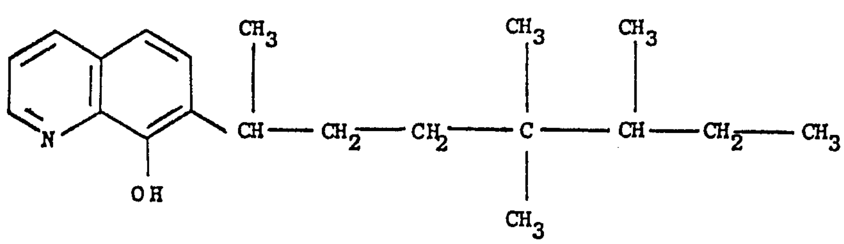

a été soumise à un test d'utilisation lors de la phase d'extraction du gallium.

Une lessive Bayer de composition $Al_2O_3$:82 g/l, $Na_2O$: 185 g/l, Ga: 240 mg/l est agitée avec une phase organique constituée de l'hydroxyquinoléine en solution à 10% dans un mélange 90—10 kérosène-décanol, l'opération étant effectuée à 50°C à l'air libre ou en atmosphère d'azote. En fonction du temps d'agitation, on analyse par chromatographie en phase gazeuse le titre en hydroxyquinoléine

dans la phase organique. Les résultats obtenus sont consignés dans le tableau suivant qui exprime le pourcentage de perte en hydroxyquinoléine.

| TEMPS (Heures) | 24 | 100 | 250 | 500 |
|---|---|---|---|---|
| a l'air | 5 % | 20 % | 55 % | 90 % |
| sous azote | 0 % | 2 % | 4 % | 7 % |

**Revendications**

1. Procédé d'extraction liquide/liquide du gallium contenu dans des solutions aqueuses basiques par mise en contact de la solution aqueuse avec une phase organique contenant principalement un solvant organique et au moins une hydroxyquinoléine substituée ayant pour formule

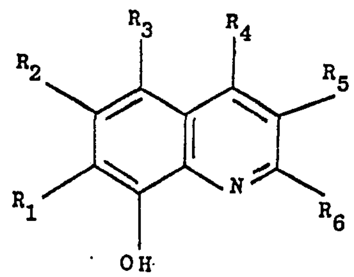

dans laquelle $R_1$, $R_2$, $R_3$, $R_4$, $R_5$, $R_6$ identiques ou différents sont choisis parmi le groupe constitué par l'hydrogène, les radicaux alkyles, alcényles, cycloaliphatiques, aromatiques; $R_1$, $R_2$, $R_3$, $R_4$, $R_5$, $R_6$ ne pouvant représenter simultanément H caractérisé en ce que l'on opère sous atmosphère inerte.

2. Procédé selon la revendication 1 caractérisé en ce que l'atmosphère inerte est constituée par de l'azote ou de l'argon.

3. Procédé selon la revendication 1 caractérisé en ce que le solvant organique est choisi parmi le groupe constitué par les hydrocarbures aliphatiques et aromatiques halogénés ou non.

4. Procédé selon la revendication 1 caractérisé en ce que l'hydroxyquinoléine est choisie parmi le groupe constitué par les $\alpha$ alcényl hydroxy-8 quinoléines de formule générale

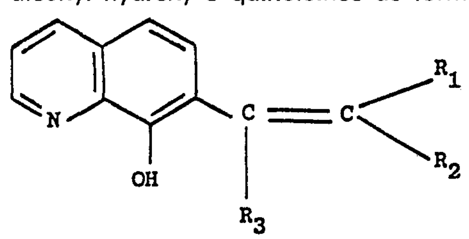

dans laquelle $R_1$, $R_2$ et $R_3$ représentent un hydrogène ou un groupement hydrocarboné, les $\beta$ alcényl hydroxy-8 quinoléines de formule

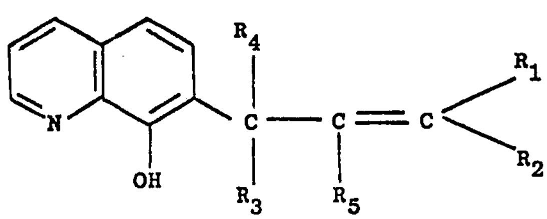

dans laquelle $R_1$, $R_2$, $R_3$, $R_4$, $R_5$ représentent un hydrogène ou un groupement hydrocarboné, les alkyl hydroxy-8 quinoléines de formule

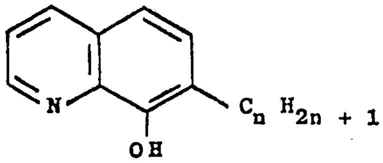

avec n compris entre 5 et 20.

5. Procédé selon la revendication 1 caractérisé en ce que la proportion d'hydroxyquinoléine substituée dans la phase organique est comprise entre 1 et 50% en volume rapportée à la phase organique.

6. Procédé selon la revendication 1 caractérisé en ce que l'on ajoute à la phase organique un agent modifieur choisi parmi le groupe comprenant les corps à fonction alcool et les esters phosphoriques.

7. Procédé de récupération du gallium contenu dans des solutions aqueuses basiques par extraction liquide/liquide selon la revendication 1 caractérisé en ce que l'on met en contact, sous atmosphère inerte, la solution aqueuse avec une phase organique contenant principalement un solvant organique et au moins une hydroxyquinoléine substituée, on opère la séparation de la phase organique de la phase aqueuse, d'au moins une fois, d'une part, on met en contact la phase organique avec une solution d'acide fort, et d'autre part, on sépare la phase organique restante de la phase aqueuse et qu'ensuite on récupère le gallium de la phase aqueuse.

8. Procédé selon la revendication 7 caractérisé en ce que la séparation de la phase organique de la phase aqueuse et/ou la mise en contact de la phase organique avec une solution d'acide fort, et/ou la séparation de la phase organique restante de la phase aqueuse, et/ou la récupération du gallium de la phase aqueuse sont effectuées sous atmosphère inerte.

9. Procédé selon la Revendication 7 ou 8 caractérisé en ce que l'acide est choisi parmi le groupe comprenant l'acide chlorhydrique, l'acide sulfurique, l'acide nitrique, l'acide bromhydrique.

**Patentansprüche**

1. Verfahren zur Flüssig-Flüssig-Extraktion von in wässrigen basischen Lösungen enthaltenem Gallium, bei dem die wässrige Lösung mit einer organischen Phase in Kontakt gebracht wird, die hauptsächlich ein orgaisches Lösungsmittel und mindestens ein substituiertes Hydroxychinolin der Formel

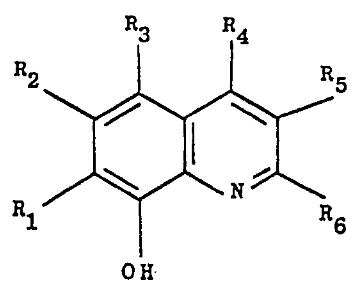

enthält, in der $R_1$, $R_2$, $R_3$, $R_4$, $R_5$ und $R_6$ gleich oder unterschiedlich aus der Gruppe ausgewählt sind, die durch Wasserstoff und die Alkyl-, Alkenyl-, cycloaliphatischen und aromatischen Reste gebildet wird, wobei $R_1$, $R_2$, $R_3$, $R_4$, $R_5$ und $R_6$ nicht gleichzeitig Wasserstoff darstellen können, dadurch gekennzeichnet, daß man unter einer inerten Atmosphäre arbeitet.

2. Verfahren nach Anspruch 1, dadurch gekennzeichnet, daß die inerte Atmosphäre durch Stickstoff oder Argon gebildet wird.

3. Verfahren nach Anspruch 1, dadurch gekennzeichnet, daß das organische Lösungsmittel aus der durch die aliphatischen und aromatischen, halogenierten oder nicht-halogenierten Kohlenwasserstoffe gebildeten Gruppe ausgewählt ist.

4. Verfahren nach Anspruch 1, dadurch gekennzeichnet, daß das Hydroxychinolin aus der Gruppe ausgewählt ist, die die $\alpha$-Alkenyl-8-hydroxychinoline der allgemeinen Formel

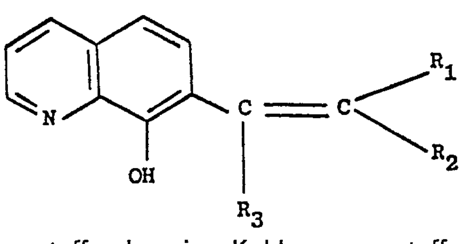

in der $R_1$, $R_2$ und $R_3$ Wasserstoff oder eine Kohlenwasserstoffgruppe darstellen, die $\beta$-Alkenyl-8-hydroxychinoline der Formel

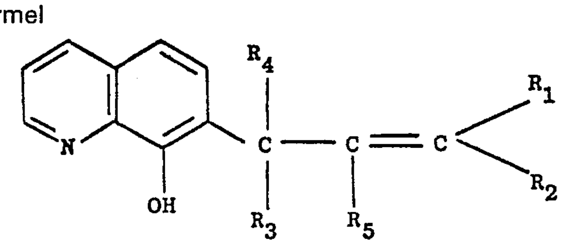

in der $R_1$, $R_2$, $R_3$, $R_4$ und $R_5$ Wasserstoff oder eine Kohlenwasserstoffgruppe darstellen und die Alkyl-8-hydroxychinoline der Formel

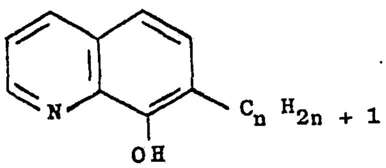

bei der n zwischen 5 und 20 liegt, umfasst.

5. Verfahren nach Anspruch 1, dadurch gekennzeichnet, daß der Anteil des substituierten Hydroxychinolins in der organischen Phase zwischen 1 und 50 Vol%, bezogen auf die organische Phase, beträgt.

6. Verfahren nach Anspruch 1, dadurch gekennzeichnet, daß man der organischen Phase ein Modifizierungsmittel zugibt, das aus der Gruppe ausgewählt ist, die Verbindungen mit einer Alkoholfunktion und Phosphorsäureester umfasst.

7. Verfahren zur Rückgewinnung von Gallium, das in wässrigen basischen Lösungen enthalten ist durch eine Flüssig/Flüssig-Extraktion nach Anspruch 1, dadurch gekennzeichnet, daß man in einer inerten Atmosphäre die wässrige Lösung mit einer organischen Phase in Kontakt bringt, die hauptsächlich ein organisches Lösungsmittel und mindestens ein substituiertes Hydroxychinolin enthält, daß man die Trennung der organischen Phase von der wässrigen Lösung mindestens einmal durchführt, wobei man zum einen die organische Phase mit einer Lösung einer starken Säure in Kontakt bringt und zum anderen die restliche organische Phase von der wässrigen Phase trennt und anschließend das Gallium aus der wässrigen Phase zurückgewinnt.

8. Verfahren nach Anspruch 7, dadurch gekennzeichnet, daß man die Trennung der organischen Phase von der wässrigen Phase und/oder das Inkontaktbringen der organischen Phase mit einer Lösung einer starken Säure und/oder die Trennung der restlichen organischen Phase von der wässrigen Lösung und/oder die Rückgewinnung des Galliums aus der wässrigen Phase unter inerter Atmosphäre durchführt.

9. Verfahren nach Anspruch 7 oder 8, dadurch gekennzeichnet, daß die Säure aus der Salzsäure, Schwefelsäure, Salpetersäure und Bromwasserstoffsäure umfassenden Gruppe ausgewählt ist.

**Claims**

1. Process for the liquid/liquid extraction of gallium contained in basic aqueous solutions, by bringing the aqueous solution into contact with an organic phase mainly containing an organic solvent and at least one substituted hydroxyquinoline having the formula

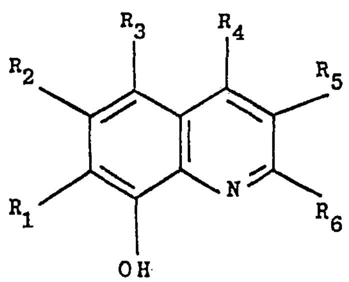

in which $R_1$, $R_2$, $R_3$, $R_4$, $R_5$ and $R_6$, which are identical or different, are chosen from amongst the group comprising hydrogen and alkyl, alkenyl, cycloaliphatic and aromatic radicals, it being impossible for $R_1$, $R_2$, $R_3$, $R_4$, $R_5$ and $R_6$ to represent H simultaneously, characterised in that the reaction is carried out under an inert atmosphere.

2. Process according to Claim 1, characterised in that the inert atmosphere consists of nitrogen or argon.

3. Process according to Claim 1, characterised in that the organic solvent is chosen from amongst the group comprising aliphatic and aromatic hydrocarbons which may or may not be substituted by halogen.

4. Process according to Claim 1, characterised in that the hydroxyquinoline is chosen from amongst the group comprising the $\alpha$-alkenyl-8-hydroxyquinolines of the general formula

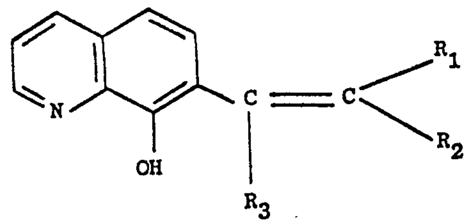

in which $R_1$, $R_2$ and $R_3$ represent a hydrogen or a hydrocarbon group, the $\beta$-alkenyl-8-hydroxyquinolines of the formula

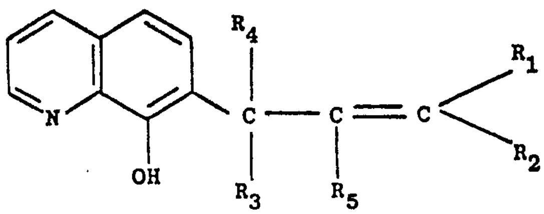

in which $R_1$, $R_2$, $R_3$, $R_4$ and $R_5$ represent a hydrogen or a hydrocarbon group, and the alkyl-8-hydroxyquinolines of the formula

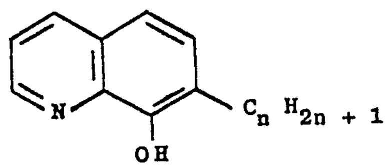

in which n is between 5 and 20.

5. Process according to Claim 1, characterised in that the proportion of substituted hydroxyquinoline in the organic phase is between 1 and 50% by volume, relative to the organic phase.

6. Process according to Claim 1, characterised in that a modifier, chosen from amongst the group comprising substances with an alcohol group and phosphoric acid esters, is added to the organic phase.

7. Process for the recovery of gallium contained in basic aqueous solutions, by liquid/liquid extraction according to Claim 1, characterised in that the aqueous solution is brought into contact, under an inert atmosphere, with an organic phase mainly containing an organic solvent and at least one substituted hydroxyquinoline, and the organic phase is separated from the aqueous phase, in that, at least once, on the one hand the organic phase is brought into contact with a solution of strong acid, and on the other hand the remaining organic phase is separated from the aqueous phase, and in that the gallium is then recovered from the aqueous phase.

8. Process according to Claim 7, characterised in that the separation of the organic phase from the aqueous phase, and/or the bringing of the organic phase into contact with a solution of strong acid, and/or the separation of the remaining organic phase from the aqueous phase, and/or the recovery of the gallium from the aqueous phase, are carried out under an inert atmosphere.

9. Process according to Claim 7 or 8, characterised in that the acid is chosen from amongst the group comprising hydrochloric acid, sulphuric acid, nitric acid and hydrobromic acid.